(19)

Europäisches Patentamt

European Patent Office

Office européen des brevets

(11) **EP 2 725 740 A1**

(12) **EUROPEAN PATENT APPLICATION**
published in accordance with Art. 153(4) EPC

(43) Date of publication:
**30.04.2014 Bulletin 2014/18**

(21) Application number: **12802791.9**

(22) Date of filing: **17.04.2012**

(51) Int Cl.:
***H04L 12/24*** *(2006.01)*

(86) International application number:
**PCT/CN2012/074199**

(87) International publication number:
**WO 2012/174934 (27.12.2012 Gazette 2012/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2011 CN 201110167382**

(71) Applicant: **ZTE Corporation**
**Shenzhen, Guangdong 518057 (CN)**

(72) Inventor: **JIANG, Long**
**Shenzhen**
**Guangdong 518057 (CN)**

(74) Representative: **Mozzi, Matteo et al**
**Jacobacci & Partners S.p.A.**
**Via Senato, 8**
**20121 Milano (IT)**

(54) **ADAPTIVE METHOD AND DEVICE FOR HEARTBEAT PERIOD**

(57)    Disclosed is an adaptive method and device for a heartbeat period. Within a set time, a reference heartbeat period is calculated according to a network load condition. Based on an offset condition of the reference heartbeat period and an offset condition between the reference heartbeat period and the current heartbeat period, it is determined whether the current heartbeat period requires to be recalculated. After the current heartbeat period is recalculated, when the network is no longer in a congested state, the recalculated current heartbeat period is activated. The present invention implements dynamic adjustment of the period of sending a heartbeat message, so as to prevent important services from being affected due to inappropriate setting of the period of sending a heartbeat message in the case of excessively high network load for a NMS or network element. Meanwhile, the waste of bandwidth and system resources and impacts on the NMS performance as the heartbeat period fails to adapt to the network condition are avoided.

Fig. 2

**Description**

Technical Field

The present invention relates to the communication field and in particular to an adaptive method and a device for a heartbeat period.

Background

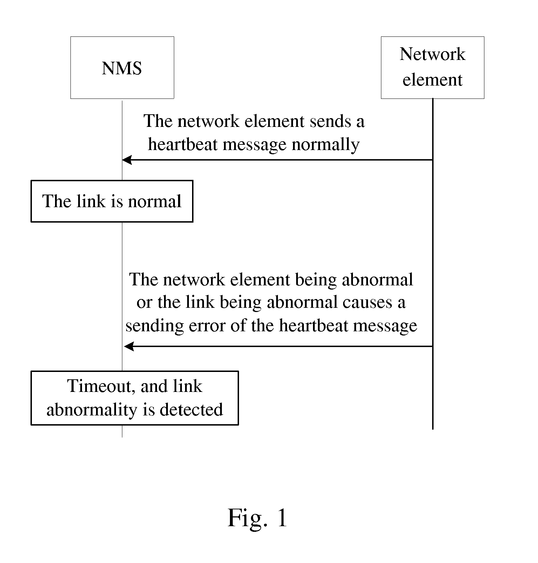

In a network management system, a network management server (NMS in short) can perform communication link detection with a network element device (network element in short) managed thereby by way of polling and checking the network element by the NMS or sending a heartbeat message by the network element to the NMS regularly. As shown in Fig. 1, if the NMS performs periodic information exchange through heartbeat messages, in the case that the network element operates normally, the network element sends a heartbeat message to the NMS, which heartbeat message indicates that the network element is in a prepared state currently, the NMS receives this heartbeat message and deems that the link between it and the network element is normal; and if the network element is abnormal or the link is abnormal and this causes a sending error in the heartbeat message, for example, the NMS does not receives the heartbeat message reported by the network element within a limited period, then it indicates that the communication link between the network element and the NMS has a fault.

Most of the existing network connection methods for transceiving a heartbeat message depend on the Ethernet method, and the existing heartbeat detection mainly has the following problems.

1. It is difficult to set a heartbeat period

The length of the heartbeat period is usually preset by human, but this period often cannot meet various different application scenarios. If the network management system employs a fixed heartbeat period, it may weaken the availability of the network management system.

2. The shock to the performance of the NMS by the heartbeat

When there are many network elements connected to the NMS, all the network elements reporting a heartbeat message to the NMS simultaneously will bring serious shock to the performance of the NMS. If it is required to discover faults such as link abnormality and so on in time, the sending frequency of the heartbeat message needs to be increased, and the NMS needs to process the heartbeat message data frequently, which affects the efficiency of the NMS, and the sending frequency of the heartbeat message being too high will also increase the network load, and it can even cause the network paralyzed.

Summary

The technical problem to be solved by the present invention is to provide an adaptive method and device for a heartbeat period, so as to adaptively and dynamically adjust the sending period of the heartbeat message and avoid the shock to the NMS performance.

The technical solution employed in the present invention is the adaptive method for a heartbeat period, which comprises:

Within a set time, calculating a reference heartbeat period according to a network load condition; based on an offset condition of the reference heartbeat period and an offset condition between the reference heartbeat period and a current heartbeat period, determining whether the current heartbeat period requires to be recalculated; and after recalculating the current heartbeat period, activating the recalculated current heartbeat period when the network is no longer in a congested state.

Preferably, within the set time, calculating the reference heartbeat period according to a network load condition in particular comprises:

within the set time, the reference heartbeat period is calculated according to a network element load condition carried in each heartbeat message in conjunction with a NMS load condition, the reference heartbeat period is set as $T_1$, the current heartbeat period is set as T, and a calculation method is embodied as :

$$T_1 = \begin{cases} 0.1T, \delta < 0.1 \\ \delta T, 0.1 \le \delta \le 10 \\ 10T, \delta > 10 \end{cases}, \text{ where } \delta = \sqrt[3]{(\lambda a + b)^2 / (\lambda a' + b')^2} \text{ a and b represent values of}$$

the current NMS load condition and the current network element load condition respectively, a' and b' represent values of the NMS load condition and the current network element load condition respectively when the heartbeat message is received last time, $0 \le a, b, a', b' \le 1$, $\lambda$ is a server weight, $1 \le \lambda \le 10$.

Preferably, based on the offset condition of the reference heartbeat period and the offset condition between the reference heartbeat period and the current heartbeat period, determining whether the current heartbeat period requires to be recalculated in particular comprises:

It is assumed that n reference heartbeat periods are calculated within the set time, offsets among the n reference heartbeat periods exceeding a first set threshold is a first condition, and an offset between average of the n reference heartbeat periods and the current heartbeat period exceeding a second set threshold is a second condition; and
it is judged whether the first condition and the second condition are satisfied at the same time, if yes, then it is determined that the current heartbeat period requires to be recalculated, otherwise, it is determined that the current heartbeat period does not require to be recalculated.
Preferably, an formula for recalculating the current heartbeat period is embodied as:

$$T' = T + \sqrt[3]{\alpha T^2 - \beta T_3^2} + \theta$$

where T is the current heartbeat period, T' is the recalculated current heartbeat period, $T_3$ is the last calculated reference heartbeat period within the set time or the average of all the calculated reference heartbeat periods within the set time; $\alpha$ and $\beta$ are overshoots, the ranges of which are $0.8 \le \alpha$ and $\beta \le 1.2$, $\theta$ is a network adjustment value, $0 \le \theta \le 1$.

Preferably, the method for judging whether a network is in the congested state comprises:

it is judged whether a packet loss rate of the heartbeat message is greater than a third set threshold, if yes,
then the network is in the congested state, otherwise,
the network is not in the congested state.

Based on the above-mentioned method, the present invention also provides an adaptive device for a heartbeat period, comprising:

a reference heartbeat period calculation module configured to calculate a reference heartbeat period according to a network load condition within a set time;
a judgment module configured to determine whether the current heartbeat period requires to be recalculated based on an offset condition of the reference heartbeat period and an offset condition between the reference heartbeat period and a current heartbeat period;
a current heartbeat period calculation module configured to recalculate the current heartbeat period when the judgment module judges that the current heartbeat period requires to be recalculated; and
a current heartbeat period activation module configured to activate the recalculated current heartbeat period when the network is no longer in the congested state.

Preferably, the reference heartbeat period calculation module is in particular configured to, within the set time, calculate the reference heartbeat period according to a network element load condition carried in each heartbeat message in conjunction with a NMS condition, set the reference heartbeat period as T1 and set the current heartbeat period as T, wherein a calculation method is embodied as:

$$T_1 = \begin{cases} 0.1T, & \delta < 0.1 \\ \delta T, & 0.1 \le \delta \le 10 \\ 10T, & \delta > 10 \end{cases}, \quad \text{where} \quad \delta = \sqrt[3]{(\lambda a + b)^2 / (\lambda a' + b')^2}$$

a and b represent values or the current NMS load condition and the current network element load condition respectively, a' and b' represent values of the NMS load condition and the current network element load condition respectively when the heartbeat message is received last time, $0 \le$ a, b, a', b' $\le 1$, $\lambda$ is a server weight, $1 \le \lambda \le 10$.

Preferably, the judgment module is in particular configured to

assume that n reference heartbeat periods are calculated within the set time, offsets among the n reference heartbeat periods exceeding a first set threshold is a first condition, and an offset between average of the n reference heartbeat periods and the current heartbeat period exceeding a second set threshold is a second condition;

judge whether the first condition and the second condition are satisfied at the same time, if yes, then determine that the current heartbeat period requires to be recalculated, otherwise, determine that the current heartbeat period does not require to be recalculated.

Preferably, when the current heartbeat period calculation module recalculates the current heartbeat period, an employed formula is embodied as:

$$T' = T + \sqrt[3]{\alpha T^2 - \beta T_3^2} + \theta$$

where T is the current heartbeat period, T' is the recalculated current heartbeat period, $T_3$ is the last calculated reference heartbeat period within the set time or the average of all the calculated reference heartbeat periods within the set time; $\alpha$ and $\beta$ are overshoots, the ranges of which are $0.8 \le \alpha$ and $\beta \le 1.2$, $\theta$ is a network adjustment value, $0 \le \theta \le 1$.

Preferably, the current heartbeat period activation module in particular comprises:

a congested state judgment sub-module configured to judge whether a packet loss rate of the heartbeat message is greater than a third set threshold, if yes, then the network is in the congested state, otherwise, the network is not in the congested state; and

a heartbeat period activation sub-module for activating the recalculated current heartbeat period when the network is no longer in a congested state.

By employing the above-mentioned technical solution, the present invention at least has the following advantages:

the adaptive method and device for a heartbeat period in the present invention implements dynamic adjustment of the period of sending a heartbeat message, so as to prevent important services from being affected due to inappropriate setting of the period of sending a heartbeat message in the case of excessively high network load for a NMS or network element. Meanwhile, the waste of bandwidth and system resources and impacts on the NMS performance as the heartbeat period fails to adapt to the network condition are avoided.

Brief Description of the Drawings

Fig. 1 is a schematic diagram of a heartbeat mechanism between a network element and a NMS;

Fig. 2 is a schematic flowchart of an adaptive method for a heartbeat period in a first embodiment of the present invention;

Fig. 3 is a structural schematic diagram of an adaptive device for a heartbeat period in a second embodiment of the present invention; and

Fig. 4 is a schematic diagram of the data format of the heartbeat message in the present invention. Detailed Description of the Embodiments

For further explaining technical means employed by the present invention for achieving predetermined purposes and the effects thereof, the present invention will be described in detail in conjunction with the accompanying drawings and preferred embodiments.

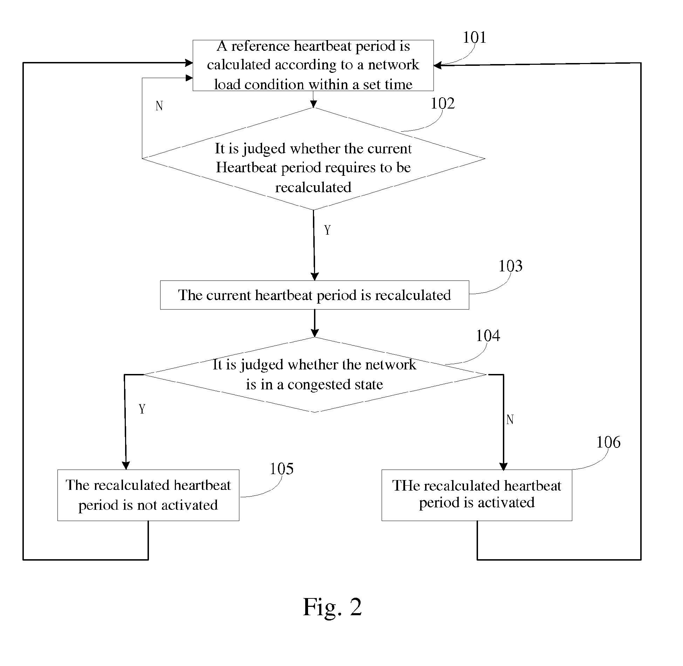

A first embodiment of the present invention, an adaptive method for a heartbeat period, as shown in Fig. 2, comprises the following particular steps:

step 101, within a set time, a reference heartbeat period is calculated according to a network load condition.

In particular, within the set time, the reference heartbeat period is calculated according to the network element load condition carried in each heartbeat message in conjunction with a NMS load condition, the reference heartbeat period is set as $T_1$, the current heartbeat period is T, and the calculation method is as follows:

$$T_1 = \begin{cases} 0.1T, \delta < 0.1 \\ \delta T, 0.1 \le \delta \le 10 \\ 10T, \delta > 10 \end{cases}, \text{ where } \delta = \sqrt[3]{(\lambda a + b)^2 / (\lambda a' + b')^2}$$

a and b represent values of the current NMS load condition and the current network element load condition respectively, a' and b' represent values of the NMS load condition and the current network element load condition when the heartbeat message is received last time, $0 \le a, b, a', b' \le 1$, the value of the NMS load condition is the actual network traffic at the NMS side divided by the maximum available network traffic, and the value of the network element load condition is the actual network traffic at the network element side divided by the maximum available network traffic, $\lambda$ is a server weight, $1 \le \lambda \le 10$, the value of $\lambda$ is set according to the sever performance, and the higher the server performance, the lower the value of $\lambda$.

If the set time is viewed as an execution period, this method can proceed to the next execution period immediately after the execution of a set time is completed.

Step 102, based on an offset condition of the reference heartbeat period and an offset condition between the reference heartbeat period and a current heartbeat period, it is determined whether the current heartbeat period requires to be recalculated, if yes, then perform step 103, otherwise, perform step 101. The current heartbeat period can be configured by the network element by default, and can also be configured for the network element by the NMS based on an SNMP (Simple NMS Protocol) message after the network element has successfully established a link with the network element.

In particular, it is assumed that n reference heartbeat periods are calculated within the set time, offsets among the n reference heartbeat periods exceeding a first set threshold is a first condition, and an offset between the average of the n reference heartbeat periods and the current heartbeat period exceeding a second set threshold is a second condition;

it is judged whether the first condition and the second condition are satisfied at the same time, if yes, then it is determined that the current heartbeat period requires to be recalculated, otherwise, it is determined that the current heartbeat period does not require to be recalculated.

Step 103, the current heartbeat period is recalculated, and the employed calculated formula is as follows:

$$T' = T + \sqrt[3]{\alpha T^2 - \beta T_3^2} + \theta$$

where T is the current heartbeat period, T' is the recalculated current heartbeat period, $T_3$ is the last calculated reference heartbeat period within the set time or the average of all the calculated reference heartbeat periods within the set time; $\alpha$ and $\beta$ are overshoots, the ranges of which are $0.8 \le \alpha$ and $\beta \le 1.2$, which are set according to the network scale, when the network scale is large, the value of $\alpha$ is increased suitably, vice versa, when the network scale is small, the value of $\beta$ is increased suitably, $\theta$ is a network adjustment value, which is adjusted slowly according to the current calculation effect, $0 \le \theta \le 1$.

Step 104, it is judged whether the network is in a congested state according to the packet loss rate of the heartbeat message, if yes, then it indicates that the recalculated current heartbeat period is inaccurate, and perform step 105, otherwise, it indicates that the recalculated current heartbeat period is accurate, and perform step 106.

In particular, the method for judging whether the network is in the congested state according to the packet loss rate of the heartbeat message comprises: it is judged whether the packet loss rate of the heartbeat message is greater than a third set threshold, if yes, then the network is in the congested state and perform step 105, otherwise, the network is not in the congested state and perform step 106.

Step 105, the recalculation of the current heartbeat period is not activated, i.e., the current heartbeat period is maintained unchanged, and perform step 101;

Step 106, the recalculation of the current heartbeat period is not activated, i.e., the network element sends a heartbeat message to the NMS according to the recalculated current heartbeat period, and perform step 101.

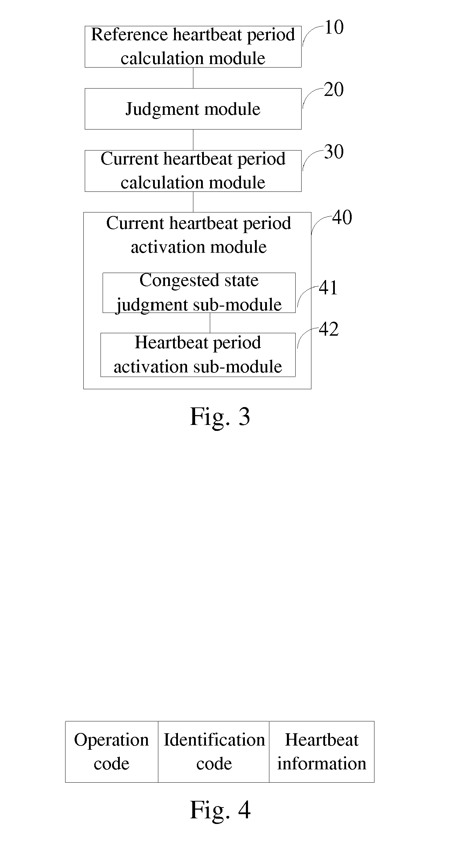

A second embodiment of the present invention, an adaptive device for a heartbeat period, as shown in Fig. 3, comprises the following constitution parts.

A reference heartbeat period calculation module 10 is configured to calculate a reference heartbeat period according to a network load condition within a set time.

In particular, the reference heartbeat period calculation module 10 is configured to, within the set time, calculate the reference heartbeat period according to the network load condition carried in each heartbeat message in conjunction with the NMS condition. Setting the reference heartbeat period as $T_1$ and the current heartbeat period as T, the calculation method is as follows: $T_1 = \begin{cases} 0.1T, \delta < 0.1 \\ \delta T, 0.1 \leq \delta \leq 10 \\ 10T, \delta > 10 \end{cases}$, where $\delta = \sqrt[3]{(\lambda a + b)^2 / (\lambda a' + b')^2}$, a and b represent the values of the current NMS load condition and the current network element load condition respectively, a' and b' represent the values of the NMS load condition and the current network element load condition respectively when the heartbeat message is received last time, $0 \leq a, b, a', b' \leq 1$, the value of the NMS load condition is the actual network traffic at the NMS side divided by the maximum available network traffic, and the value of the network element load condition is the actual network traffic at the network element side divided by the maximum available network traffic, $\lambda$ is a server weight, $1 \leq \lambda \leq 10$, the value of $\lambda$ is set according to the sever performance, and the higher the server performance, the lower the value of $\lambda$.

A judgment module 20 is configured to, based on an offset condition of the reference heartbeat period and an offset condition between the reference heartbeat period and the current heartbeat period, determine whether the current heartbeat period requires to be recalculated.

In particular, it is assumed that n reference heartbeat periods are calculated within the set time, offsets among the n reference heartbeat periods exceeding a first set threshold is a first condition, an offset between the average of the n reference heartbeat periods and the current heartbeat period exceeding a second set threshold is a second condition.

The judgment module 20 judges whether the first condition and the second condition are satisfied at the same time, if yes, then it is determined that the current heartbeat period requires to be recalculated, otherwise, it is determined that the current heartbeat period does not require to be recalculated.

A current heartbeat period calculation module 30 is configured to recalculate the current heartbeat period when the judgment module 20 judges that the current heartbeat period requires to be recalculated, and the employed formula is as follows:

$$T' = T + \sqrt[3]{\alpha T^2 - \beta T_3^2} + \theta$$

where T is the current heartbeat period, T' is the recalculated current heartbeat period, $T_3$ is the last calculated reference heartbeat period within the set time or the average of all the calculated reference heartbeat periods within the set time; $\alpha$ and $\beta$ are overshoots, the ranges of which are $0.8 \leq \alpha$ and $\beta \leq 1.2$, which are set according to the network scale, when the network scale is large, the value of $\alpha$ is increased suitably, vice versa, when the network scale is small, the value of $\beta$ is increased suitably, $\theta$ is a network adjustment value, which is adjusted slowly according the current calculation effect, and $0 \leq \theta \leq 1$.

A current heartbeat period activation module 40 is configured to activate the recalculated current heartbeat period when the network is no longer in a congested state. The current heartbeat period activation module 40 in particular comprises:

a congested state judgment sub-module 41 configured to judge whether the packet loss rate of the heartbeat message is greater than a third set threshold, if yes, then the network is in the congested state, otherwise, the network is not in the congested state; and a heartbeat period activation sub-module 42 configured to activate the recalculated current heartbeat period when the network is no longer in the congested state.

A third embodiment of the present invention, which is based on the first and second embodiment, is described in detail in conjunction with an instance of the handshake and heartbeat detection between a NMS and a network element in a NMS system.

I. The handshake flow between the NMS and the network element comprises the following steps.

Step A1, the NMS initiates a link establishment command based on the TCP (Transmission Control Protocol) and actively queries the network element.

Step A2, it is judged whether the network element can be used normally, if yes, then the network element will feed back to the link establishment command and starts to send heartbeat messages based on UDP (User Datagram Protocol), and proceed to step A6, otherwise, proceed to step A3.

The data format of the heartbeat message is as shown in Fig. 4, comprising: an operation code, an identification code and heartbeat information, optionally, the heartbeat message also comprises an ID (Identity) code for uniquely identifying this heartbeat message, which can ensure the uniqueness of heartbeat information and functions in particularly analyzing the link fault. The operation code is used for representing that the type of this message is a heartbeat message, so as to distinguish from other messages in the link; the identification code is used for recording the number of heartbeat messages sent from the network element, for example, the identification code of the heartbeat message sent from a network element for the first time is 2, the identification code from the heartbeat message sent for the second time increases from 1 step by step; and the heartbeat information can contain the network element load condition.

Step A3, the NMS does not receive any response from the network element, determines that the link with the network element is broken, and updates the link state information.

Step A4, the NMS resets the receiving code as 0, and resets the current heartbeat period as a default value, such as 5s; and the NMS sets a receiving code for each network element respectively, the initial value is 0, and each time receiving a heartbeat message sent from a network element, the NMS increases the receiving code corresponding to the network element by 1.

Step A5, all the network elements, which have failed to establish links, are polled and reinitiate link establishment operations. This polling time interval can be set as 5 min.

Step A6, when a link establishment command feedback is received from the first network element, proceed to step A7.

Step A7, the NMS starts up a heartbeat message processing thread pool, waits for a heartbeat message to be processed, and then enters a heartbeat message processing flow. The multi-thread mechanism of the thread pool is employed to process heartbeat messages in batch, which can better avoid the shock to the NMS.

II. Heartbeat message processing flow at the NMS side comprises the following steps.

Step B1, the NMS receives the heartbeat message and proceed to step B2;

Step B2, a heartbeat message thread is started to process this heartbeat message to obtain the operation code, identification code and network element load condition of this heartbeat message, calculates the reference heartbeat period T1 according to the network element load condition and NMS load condition, caches this reference heartbeat period T1, records the identification code of this heartbeat message as the identification code of the heartbeat message reported for the first time if it is the heartbeat message reported by the network element for the first time in step B1, and sets the receiving code as 0 and increases same by 1 afterwards;

Step B3, n is set as a period oscillation threshold, here its value can be 10, if the offset between two adjacent $T_1$ is beyond an offset m for n times continuously, the value of m can be 2, and if the offset between $T_1$ and the current heartbeat period T is beyond an offset k, the value of k can be 1, then proceed to step B4, otherwise, let T' = T, and proceed to B5;

Step B4, the heartbeat period T' is calculated, for example, $T' = T + \sqrt[3]{T^2 - T_3^2}$ , where T is the current heartbeat period, T' is the recalculated current heartbeat period, $T_3$ is the last calculated reference heartbeat period within the set time, or the average of all the reference heartbeat periods calculated within the set time;

Step B5, the link state is updated as link available;

Step B6, it is judged whether the network is congested, and the particular judgment method is: if the value, which obtained from subtracting the identification code of the currently received heartbeat message with the receiving code and then with the identification code of the heartbeat message which is reported for the first time, is greater than a set threshold, then it is deemed that since the number of the heartbeat messages with noncontinuous numerals which are received due to network congestion, i.e. packet loss rate, exceeds a tolerant limit, the receiving code is set to be 0 at this moment and the identification code of the currently received heartbeat message is recorded as that of the heartbeat message which is reported for the first time, and the network congestion flag bit is set to be True; and if the value, which is obtained from subtracting the identification code of the currently received heartbeat message with the receiving code and then with the identification code of the heartbeat message which is reported for the first time, does not reach the set threshold, then the network congestion flag bit is kept as False;

Step B7, if the network congestion flag bit is True, then it indicates that the calculated heartbeat period T' is inaccurate, and so the current heartbeat period T will not be modified, and the network congestion flag bit is set as False; and if the network congestion flag bit is True, then it indicates that the calculated heartbeat period T' is accurate, and proceed to step B8;

Step B8, it is judged whether the value of T and that of T' are the same, if not, then the current heartbeat period will be changed, and proceed to step B9; and if yes, then no action will be taken, and the flow ends; and

Step B9, the heartbeat period T is reset as T', and the reset current heartbeat period is issued to the network element based on an SNMP message, and the flow ends.

The adaptive method and device for a heartbeat period in the present invention implements dynamic adjustment of the period of sending a heartbeat message, so as to prevent important services from being affected due to inappropriate setting of the period of sending a heartbeat message in the case of excessively high network load for a NMS or network element. Meanwhile, the waste of bandwidth and system resources and impacts on the NMS performance as the heartbeat period fails to adapt to the network condition are avoided.

By way of the description of particular embodiments, the technical means which are taken by the present invention for achieving intended objects and the effects thereof can be understood deeply and concretely, and the drawings are merely used for providing reference and illustration, rather than limiting the present invention.

## Claims

1. An adaptive method for a heartbeat period, **characterized by** comprising:

   calculating a reference heartbeat period according to a network load condition within a set time;
   based on an offset condition of the reference heartbeat period and an offset condition between the reference heartbeat period and a current heartbeat period, determining whether the current heartbeat period requires to be recalculated; and
   after recalculating the current heartbeat period, activating the recalculated current heartbeat period when the network is no longer in a congested state.

2. The method according to claim 1, **characterized in that** within the set time, calculating the reference heartbeat period according to a network load condition in particular comprises:

   within the set time, the reference heartbeat period is calculated according to a network element load condition carried in each heartbeat message in conjunction with a NMS load condition, the reference heartbeat period is set as $T_1$, the current heartbeat period is set as $T$, and a calculation method is embodied as:

   $$T_1 = \begin{cases} 0.1T, \delta < 0.1 \\ \delta T, 0.1 \leq \delta \leq 10 \\ 10T, \delta > 10 \end{cases}, \text{ where } \delta = \sqrt[3]{(\lambda a + b)^2 / (\lambda a' + b')^2}, \text{ a and b represent values of the}$$

   current NMS load condition and the current network element load condition respectively, a' and b' represent values of the NMS load condition and the current network element load condition respectively when the heartbeat message is received last time, $0 \leq a, b, a', b' \leq 1$, $\lambda$ is a server weight, $1 \leq \lambda \leq 10$.

**3.** The method according to claim 1, **characterized in that** based on the offset condition of the reference heartbeat period and the offset condition between the reference heartbeat period and the current heartbeat period, determining whether the current heartbeat period requires to be recalculated in particular comprises:

it is assumed that n reference heartbeat periods are calculated within the set time, offsets among the n reference heartbeat periods exceeding a first set threshold is a first condition, and an offset between average of the n reference heartbeat periods and the current heartbeat period exceeding a second set threshold is a second condition; and

it is judged whether the first condition and the second condition are satisfied at the same time, if the first condition and the second condition are satisfied at the same time, then it is determined that the current heartbeat period requires to be recalculated, otherwise, it is determined that the current heartbeat period does not require to be recalculated.

**4.** The method according to claim 1, **characterized in that** an formula for recalculating the current heartbeat period is embodied as:

$$T' = T + \sqrt[3]{\alpha T^2 - \beta T_3^2} + \theta$$

where T is the current heartbeat period, T' is the recalculated current heartbeat period, T3 is the last calculated reference heartbeat period within the set time or the average of all the calculated reference heartbeat periods within the set time; $\alpha$ and $\beta$ are overshoots, the ranges of which are $0.8 \leq \alpha$ and $\beta \leq 1.2$, $\theta$ is a network adjustment value, $0 \leq \theta \leq 1$.

**5.** The method according to any one of claims 1 to 4, **characterized in that** the method for judging whether the network is in the congested state comprises:

it is judged whether a packet loss rate of the heartbeat message is greater than a third set threshold, if the packet loss rate of the heartbeat message is greater than the third threshold set, then the network is in the congested state, otherwise, the network is not in the congested state.

**6.** An adaptive device for a heartbeat period, **characterized by** comprising:

a reference heartbeat period calculation module configured to calculate a reference heartbeat period according to a network load condition within a set time;

a judgment module configured to determine whether the current heartbeat period requires to be recalculated based on an offset condition of the reference heartbeat period and an offset condition between the reference heartbeat period and a current heartbeat period;

a current heartbeat period calculation module configured to recalculate the current heartbeat period when the judgment module judges that the current heartbeat period requires to be recalculated; and

a current heartbeat period activation module configured to activate the recalculated current heartbeat period when the network is no longer in a congested state.

**7.** The device according to claim 6, **characterized in that** the reference heartbeat period calculation module is in particular configured to, within the set time, calculate the reference heartbeat period according to a network element load condition carried in each heartbeat message in conjunction with a NMS condition, set the reference heartbeat period as $T_1$, and set the current heartbeat period as T, wherein a calculation method is embodied as:

$$T_1 = \begin{cases} 0.1T, \delta < 0.1 \\ \delta T, 0.1 \leq \delta \leq 10 \\ 10T, \delta > 10 \end{cases}, \text{ where } \delta = \sqrt[3]{(\lambda a + b)^2 / (\lambda a' + b')^2},$$ a and b represent values of the current NMS load condition and the current network element load condition respectively, a' and b' represent values of the NMS load condition and the current network element load condition respectively when the heartbeat message is received last time, $0 \leq a, b, a', b' \leq 1$, $\lambda$ is a server weight, $1 \leq \lambda \leq 10$.

8. The device according to claim 6, **characterized in that** the judgment module is in particular configured to:

   assume that n reference heartbeat periods are calculated within the set time, offsets among the n reference heartbeat periods exceeding a first set threshold is a first condition, and an offset between average of the n reference heartbeat periods and the current heartbeat period exceeding a second set threshold is a second condition; and

   judge whether the first condition and the second condition are satisfied at the same time, if the first condition and the second condition are satisfied at the same time, then determine that the current heartbeat period requires to be recalculated, otherwise, determine that the current heartbeat period does not require to be recalculated.

9. The device according to claim 6, **characterized in that** when the current heartbeat period calculation module recalculates the current heartbeat period, an employed formula is embodied as $T' = T + \sqrt[3]{\alpha T^2 - \beta T_3^2} + \theta$ , where T is the current heartbeat period, T' is the recalculated current heartbeat period, $T_3$ is the last calculated reference heartbeat period within the set time or the average of all the calculated reference heartbeat periods within the set time; $\alpha$ and $\beta$ are overshoots, the ranges of which are $0.8 \le \alpha$ and $\beta \le 1.2$, $\theta$ is a network adjustment value, $0 \le \theta \le 1$.

10. The device according to any one of claims 6 to 9, **characterized in that** the current heartbeat period activation module in particular comprises:

    a congested state judgment sub-module configured to judge whether a packet loss rate of the heartbeat message is greater than a third set threshold, if the packet loss rate of the heartbeat message is greater than the third threshold set, then the network is in the congested state, otherwise, the network is not in the congested state; and

    a heartbeat period activation sub-module configured to activate the recalculated current heartbeat period when the network is no longer in the congested state.

Fig. 1

A reference heartbeat period is calculated according to a network load condition within a set time — 101

It is judged whether the current Heartbeat period requires to be recalculated — 102

N

Y

The current heartbeat period is recalculated — 103

It is judged whether the network is in a congested state — 104

Y

N

The recalculated heartbeat period is not activated — 105

THe recalculated heartbeat period is activated — 106

Fig. 2

Reference heartbeat period
calculation module `⌐10`

Judgment module `⌐20`

Current heartbeat period
calculation module `⌐30`

Current heartbeat period
activation module `⌐40`

Congested state
judgment sub-module `⌐41`

Heartbeat period
activation sub-module `⌐42`

Fig. 3

| Operation code | Identification code | Heartbeat information |
|---|---|---|

Fig. 4

| INTERNATIONAL SEARCH REPORT | International application No. |
|---|---|
| | PCT/CN2012/074199 |

**A. CLASSIFICATION OF SUBJECT MATTER**

H04L 12/24 (2006.01) i

According to International Patent Classification (IPC) or to both national classification and IPC

**B. FIELDS SEARCHED**

Minimum documentation searched (classification system followed by classification symbols)

IPC: H04L, H04Q, H04W, G06F

Documentation searched other than minimum documentation to the extent that such documents are included in the fields searched

Electronic data base consulted during the international search (name of data base and, where practicable, search terms used)

CPRSABS, CNKI: heartbeat cycle calculate adjust self-adaption interval judge determine whether

DWPI: heartbeat period cycle interval heart beat calculat+ adjust+ chang+

**C. DOCUMENTS CONSIDERED TO BE RELEVANT**

| Category* | Citation of document, with indication, where appropriate, of the relevant passages | Relevant to claim No. |
|---|---|---|
| A | CN 1661968 A (LENOVO (BEIJING) CO., LTD.), 31 August 2005 (31.08.2005), description, page 5 | 1-10 |
| A | US 2008165796 A1 (INT BUSINESS MACHINES CORP.), 10 July 2008 (10.07.2008), the whole document | 1-10 |
| A | CAI, Jingping et al.: An Adaptable Failure Detection Method for High Reliable Distributed Computing Systems, TRANSACTIONS OF BEIJING INSTITUTE OF TECHNOLOGY, January 2006, vol. 26, no. 1, pages 49-52 | 1-10 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 July 2012 (12.07.2012) | **26 July 2012 (26.07.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Zhiwei** Telephone No.: (86-10) **62411285** |
|---|---|

Form PCT/ISA/210 (second sheet) (July 2009)

## INTERNATIONAL SEARCH REPORT
Information on patent family members

| | International application No. |
|---|---|
| | **PCT/CN2012/074199** |

| Patent Documents referred in the Report | Publication Date | Patent Family | Publication Date |
|---|---|---|---|
| CN 1661968 A | 31.08.2005 | CN 100367714 C | 06.02.2008 |
| US 2008165796 A1 | 10.07.2008 | None | |

Form PCT/ISA/210 (patent family annex) (July 2009)